# Europäisches Patentamt

# European Patent Office

# Office européen des brevets

(11) Veröffentlichungsnummer: **0 078 994**
**B1**

(12) **EUROPÄISCHE PATENTSCHRIFT**

(45) Veröffentlichungstag der Patentschrift:
17.04.85

(51) Int. Cl.⁴: **C 09 J 3/14,** C 08 F 220/00,
C 08 F 291/00, C 08 F 4/52

(21) Anmeldenummer: 82109965.2

(22) Anmeldetag: 28.10.82

(54) Organo-Borverbindungen enthaltende Stoffgemische, Verfahren zu ihrer Herstellung und ihre Verwendung.

(30) Priorität: 05.11.81 DE 3143945
01.03.82 DE 3207263

(73) Patentinhaber: Henkel Kommanditgesellschaft auf Aktien, Postfach 1100 Henkelstrasse 67, D-4000 Düsseldorf-Holthausen (DE)

(43) Veröffentlichungstag der Anmeldung:
18.05.83 Patentblatt 83/20

(72) Erfinder: Ritter, Wolfgang, Dr., Oppelner Weg 3, D-4000 Düsseldorf (DE)

(45) Bekanntmachung des Hinweises auf die Patenterteilung:
17.04.85 Patentblatt 85/16

(84) Benannte Vertragsstaaten:
AT BE CH DE FR GB IT LI LU NL SE

(56) Entgegenhaltungen:
EP - A - 0 051 796

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Bekanntlich sind Organo-Borverbindungen, insbesondere Boralkylverbindungen geeignet, radikalische Polymerisationen bei Raumtemperatur auszulösen. Der zur Polymerisation notwendige Sauerstoff ist praktisch allgegenwärtig und braucht nicht getrennt zugegeben zu werden. Bevorzugt eingesetzt werden bisher einfache Trialkylborverbindungen wie Triethylbor oder Tri-n-butylbor. Zur Verwendung solcher Trialkylborverbindungen als Polymerisationsinitiatoren wird zum Beispiel verwiesen auf die US-PSen 3 476 727, 3 633 490, 2 985 633 und die GB-PS 1 113 722. Die US-PS 4 167 616 schildert die Verwendung der Umsetzungsprodukte von Butadien und Diboran als Polymerisationsstarter.

Entsprechende Boralkylverbindungen eignen sich auch als Härter für Monomerklebstoffe, insbesondere für (Meth)-acrylatklebstoffe. Diese Klebstoffsysteme enthalten neben Acrylsäure- oder Methacrylsäureestern als wesentlichen Bestandteil Trialkylborverbindungen, zum Beispiel Triethylbor, Tri-n-butylbor und dergleichen, vergleiche hierzu beispielsweise JP-PS 4 214 318.

Trialkylborverbindungen dieser Art weisen aber bekanntlich den entscheidenden Nachteil auf, gegebenenfalls schon bei Raumtemperatur leicht entzündlich oder gar selbstentzündlich zu sein, so daß die Handhabung solcher Klebstoffmischungen erhebliche Schwierigkeiten bereitet. Man hat versucht diesen Nachteil dadurch zu beseitigen, daß man die Trialkylborverbindungen mit 0,3 bis 0,9 Mol Sauerstoff umgesetzt hat, vergleiche DE-OS 2 321 215. Außerdem hat man versucht, die Trialkylborverbindungen mit Aminen umzusetzen um so ihre Selbstentzündlichkeit herabzusetzen, vergleiche hierzu JP-PS 4 529 195.

Durch diese Maßnahmen wird zwar die Zündtemperatur in den Bereich von etwa 0 bis 70° C verschoben, trotzdem bleibt für die Praxis eine erhebliche Unsicherheit bei der Handhabung solcher Mischungen bestehen. Zudem ist die Reaktivität dieser Derivate stark vermindert.

Freie Boralkylverbindungen werden bekanntlich bei Sauerstoffzutritt in schneller Reaktion zu Borsäureestern oxidiert, welche ebenfalls nicht mehr polymerisationsauslösend wirken. Bisher fordern daher die Dosierung von Boralkylen — ebenso wie selbstverständlich auch der Herstellungprozeß — völligen Sauerstoffausschluß, um deren Aktivität als Initiatoren zu erhalten. Konkret muß die jeweils benötigte Substanzmenge unter Inertgas in völlig dichte Gefäße abgepackt und ein Sauerstoffzutritt zum Vorratsgefäß ausgeschlossen werden. Die portionierten Boralkyle sind quantitativ zu verbrauchen. Die an sich interessante Stoffklasse der Boralkylverbindungen eignet sich daher in ihren bisher beschriebenen Systemen nicht für konstruktive Verklebungen.

Wesentliche Vorteile der Boralkylinitiatoren sind beispielsweise: Die Polymerisationsreaktionen laufen auch bei niedriger Temperatur insbesondere bei Raumtemperatur ab, das Starter/Härtersystem liegt in einkomponentiger Form vor und die Polymerisationsgeschwindigkeit kann durch Variation des Sauerstoffangebots beeinflußt werden.

Es ist weiterhin bekannt, daß gewisse ausgewählte Boralkylverbindungen stabiler gegen Zutritt von Luftsauerstoff sind. Es handelt sich dabei in der Regel um Borverbindungen mit sterisch gehinderten Alkylresten. Typische Vertreter dieser Stoffklasse sind Diisopinocampheylboran, Dicyclohexylboran, Thexylboran-(2,3-dimethyl-2-butylboran), 3,5-Dimethylborinan, Diisoamylboran und insbesondere das 9-Borabicyclo[3.3.1]nonan, das aus praktischen Gründen bevorzugt eingesetzt werden kann. Ausgewählte Verbindungen dieser Art besitzen zwar in der Regel bei Zutritt von Luftsauerstoff keine Selbstentzündlichkeit, gleichwohl verlieren sie unter dieser Bedingung rasch ihre Fähigkeit zur Polymerisationsauslösung, so daß ihre Verwendung im praktisch-technischen Verfahren mit beträchtlichen Schwierigkeiten verbunden ist. Zudem sind diese stabileren Boralkyle in vielen Monomeren — insbesondere in estergruppenhaltigen Systemen — nur sehr schwer oder sehr langsam löslich.

Die vorliegende Erfindung geht von der Aufgabe aus, Polymerisationsinitiatoren auf Basis von Organo-Borverbindungen zur Verfügung zu stellen, die alle zuvorgenannten Vorteile für solche Organobor-Initiatoren aufweisen und insbesondere bei der Zugabe zu Monomer-Systemen durch Oxidation mit Luftsauerstoff leicht steuerbare Polymerisationen auslösen. Abweichend von den bisher bekannten Systemen sollen die neuen Organobor-Systeme aber kaum sauerstoffempfindlich und in gar keinem Fall selbstentzündlich sein. Im Extremfall will die Erfindung neue Organobor-Systeme schaffen, die bei der Lagerung an der Luft im wesentlichen stabil sind und damit auch nach längerer Lagerung an Luft bei der Zugabe zu Monomeren spontan die Polymerisation auslösen können. Die neuen Organoborverbindungen enthaltenden Systeme sollen zusätzlich eine verbesserte Löslichkeit beispielsweise in estergruppenhaltigen Monomersystemen — zum Beispiel in Methacrylsäureestern — aufweisen. Insbesondere in diesem Zusammenhang will die Erfindung in einer besonderen Ausführungsform fließfähige Initiatormassen zur Verfügung stellen, wenn auch die erfindungsgemäße Lehre hierauf nicht beschränkt ist.

Die technische Lösung der erfindungsgemäßen Aufgabenstellungen geht von der überraschenden Feststellung aus, daß die Empfindlichkeit von Organoborverbindungen insbesondere von Boralkylbeziehungsweise Borarylverbindungen dadurch ganz beträchtlich gesenkt werden kann, daß die Organoborverbindungen in innige Abmischung mit organischen Oligomeren — beziehungsweise Polymeren — gebracht werden, die den Borverbindungen gegenüber an sich inert sind. Die gegebenenfalls vorliegende Selbstentzündlichkeit der Borverbindungen an Luft kann auf diese Weise beseitigt werden. Ebenso wird der rasche Abfall der reaktionsauslösenden Wirksamkeit dieser Organobor-Ver-

2

bindungen unter Sauerstoffzutritt ganz wesentlich gebremst, so daß Systeme der beschriebenen Art in der Regel stundenlang oder gar tagelang dem Zutritt von Luftsauerstoff ausgesetzt sein können ohne ihre polymerisationsauslösende Wirkung zu verlieren. Begreiflicherweise wird hierdurch das praktische Arbeiten mit den an sich interessanten Organo-Borverbindungen ganz beträchtlich erleichtert.

Gegenstand der Erfindung sind dementsprechend in einer ersten Ausführungsform durch Luftzutritt aktivierbare Startersysteme für die Polymerisation olefinischer Verbindungen auf Basis von Organo-Borverbindungen mit verbesserter Lagerstabilität auch bei Luftzutritt. Diese Startersysteme der Erfindung sind dadurch gekennzeichnet, daß sie aus einer homogenen Mischung wenigstens einer durch Luftzutritt aktivierbaren Organo-Borverbindung mit wenigstens einem bei Raumtemperatur flüssigen bis festen, den Organo-Borverbindungen gegenüber inerten organischen Oligomeren beziehungsweise Polymeren bestehen.

Unter dem Begriff der »homogenen Mischung« werden dabei bevorzugt bei Lagerungs- und Anwendungstemperatur einphasige Stoffgemische verstanden, wie sie charakteristisch für echte Lösungen sind. Bevorzugt besitzen dementsprechend in den erfindungsgemäßen Startersystemen die den Organo-Borverbindungen gegenüber inerten Oligomer- beziehungsweise Polymerkomponenten die Funktion eines Lösungsmittel. Zweckmäßigerweise sind im Falle einer nur beschränkten Löslichkeit der Organo-Borverbindungen in den inerten Trägersystemen die jeweiligen Konzentrationen der Organo-Borverbindungen in den erfindungsgemäßen Stoffmischungen so eingeschränkt, daß der hier dargestellte homogene Mischungszustand über die gesamte Masse erhalten ist. Die erfindungsgemäßen Startersysteme sind letztlich damit als Lösungen der Organo-Borverbindungen in Lösungsmitteln mit sehr niedrigem Dampfdruck anzusehen. Ausgewählte Systeme der erfindungsgemäßen Art zeichnen sich durch folgende Eigenschaften aus: Sie sind fließfähig — insbesondere flüssig — und damit leicht zu dosieren. Sie sind nicht selbstentzündlich und stellen geringe Anforderung bei ihrer Lagerung. Die zur Härtung der Monomerkomponenten benötigte Menge an Startersystem liegt niedrig. Ausgewählte Kombinationen sind selbst nach längerer Lagerung an der Luft noch voll aktiv. Die Verträglichkeit des jeweils zu polymerisierenden Monomersystems und der Härterkomponente kann durch Abstimmung der Systeme aufeinander leicht gesichert werden.

Als Organo-Borverbindungen, die als Initiator wirken, kommen die bekannten, beziehungsweise auch in bekannter Weise herstellbaren, durch Sauerstoff — insbesondere durch Luftsauerstoff — aktivierbaren Organo-Borverbindungen in Betracht. Es kann im Rahmen der Erfindung allerdings bevorzugt sein, daß schon die reine Organo-Borverbindung bei Normaltemperatur an Luft nicht selbstentzündlich ist. Hierdurch kann insbesondere eine erhöhte Lagerstabilität unter Wirkungserhalt sichergestellt werden.

Geeignet sind in erster Linie Boralkyl- und/oder Borarylverbindungen beziehungsweise die entsprechenden Organo-Borhydridverbindungen. Boralkylverbindungen beziehungsweise Boralkylhydride sind eine besonders geeignete Stoffklasse. In Betracht kommen also in der bevorzugten Ausführungsform Verbindungen der Typen:

$$R_1R_2R_3B,$$
$$R_1R_2BH \text{ und/oder } R_1BH_2,$$

wobei in diesen allgemeinen Formeln die Reste $R_1$, $R_2$ und $R_3$ Kohlenwasserstoffreste insbesondere Alkylreste sind, die allerdings auch Heteroatome — insbesondere O, N und/oder S — enthalten können. Liegen wenigstens zwei solcher organischen Reste am jeweiligen Boratom vor, so können sie ihrerseits zu einem Ringsystem geschlossen sein. Die das Bor substituierenden Kohlenwasserstoffreste weisen in einer bevorzugten Ausführungsform jeweils nicht mehr als etwa 30 C-Atome, vorzugsweise nicht mehr als etwa 25 C-Atome auf. Es kann bevorzugt sein, daß jeder dieser organischen Reste am Bor nicht mehr als etwa 12 bis 15 C-Atome besitzt.

Als borhaltige Initiatorkomponente oder auch zur Herstellung geeigneter borhaltiger Initiatorkomponenten können insbesondere Organo-Bor-mono-hydridverbindungen, vor allem Dialkylbormonohydride Verwendung finden.

Typische Vertreter solcher Borverbindungen sind beispielsweise 9-Borabicyclo[3.3.1]nonan (9-BBN), Diisopinocampheylboran, Dicyclohexylboran, Thexylboran-(2,3-dimethyl-2-butylboran), 3,5-Dimethylborinan und Diisoamylboran. Von diesen Verbindungen ist das zuerst genannte 9-Borabicyclo[3.3.1]nonan (9-BBN) aus praktischen Gründen bevorzugt. Die vorstehend genannten Verbindungen können beispielsweise aus Natriumborhydrid und Bortrifluorid mit geeigneten Olefinen oder Diolefinen hergestellt werden. Auch können zur Darstellung Diboran, dessen Ether-, Amin- oder Sulfidkomplexe eingesetzt werden.

Eine Zusammenstellung der Herstellungsmöglichkeiten geeigneter Borverbindungen findet sich in der Monographie Herbert C. Brown, 1975 »Organic Synthesis via Boranes«, Verlag John Wiley & Sons.

Als Initiatoren können weiterhin einfache Trialkylborane sowie Hydroborierungsprodukte von Mono- oder insbesondere Dialkylboranen und Olefinen eingesetzt werden. Als Olefine sind beispielsweise brauchbar Ethen, Propen, Buten, Isobuten, Hexen, Cyclohexen, Vinylchlorid, Allylchlorid, Allylamin oder auch (Meth)-acrylsäureester, wie die entsprechenden Methylester, Vinylacetat oder Crotonsäureester. Aus der Gruppe der hier beispielsweise geeigneten Verbindungen sind erwähnenswert: Trialkylborverbindungen mit 1 bis 12 C-Atomen im jeweiligen Alkylrest, beispielsweise Trimethylbor, Triethylbor, Tripropylbor, Tributylbor oder Trihexylbor, in der Regel besser geeignet sind allerdings die komplexer aufgebauten Boralkylverbindungen mit insbesondere sterisch gehinderten Alkylresten wie Diisopinocampheylbutylbor, Thexylcyclohexylcyclopentylbor, Thexyllimonylbor, Trinorbornylbor, B-Butyl-9-borabicyclo[3.3.1]nonan, B-Isobutyl-9-borabicyclo[3.3.1]nonan, B-2-(4-Cyclohexenyl)-ethyl-9-borabicyclo[3.3.1]nonan, B-Cyclopropyl-9-borabicyclo[3.3.1]nonan, B-p-Tolyl-9-borabicyclo[3.3.1]nonan und B-tert.-Butyl-3,5-dimethylborinan.

Besonders geeignet können aber auch die in der europäischen Patentanmeldung 0 087 708 geschilderten neuen Boralkylverbindungen sein, die Borwasserstoffreste oder Organoborreste an Fettsäure- und/oder Fettalkoholestern enthalten und insbesondere Umsetzungsprodukte von Borwasserstoff und/oder wenigstens eine B-H-Bindung aufweisenden Organo-Borverbindungen mit Estern olefinisch ungesättigter Fettsäuren und/oder olefinisch ungesättigten Fettalkoholen sind. Bevorzugt sind hier entsprechende borhaltige Umsetzungsprodukte von Estern mehrwertiger Alkohole mit ungesättigten Fettsäuren und/oder von Polycarbonsäuren mit ungesättigten Fettalkoholen.

Als Lösungsmittel mit sehr niedrigem Dampfdruck eignen sich Oligomere beziehungsweise Polymere, die gegenüber den Organo-Borverbindungen inert sind, im übrigen aber keinen Einschränkungen bezüglich ihrer Struktur unterliegen, vorausgesetzt es besteht die homogene Mischbarkeit zwischen diesen als Lösungsmittel wirkenden Polymersubstanzen und den Organo-Borverbindungen. Geeignet sind dementsprechend alle Polymerisate, Polykondensate und/oder Polyadditionsprodukte, die die angegebenen Bedingungen erfüllen. Die durchschnittlichen Molekulargewichte dieser oligomeren beziehungsweise polymeren Lösungsmittel können im Bereich von 200 bis 50 000 000 g/Mol liegen. Je nach Struktur und Molekulargewicht können diese Lösungsmittel bei Raumtemperatur niedrig-viskos fließfähig bis fest sein. Für einige Anwendungszwecke — beispielsweise auf dem Gebiet der Reaktionsklebstoffe — kann es wünschenswert sein, daß die Organo-Borverbindungen enthaltenden Stoffmischungen bei Raumtemperatur viskos fließfähig beziehungsweise streichfähig sind. Für die Wirksamkeit der erfindungsgemäß eingesetzten Startersysteme als Initiatoren ist das allerdings keine Voraussetzung. Im Gegenteil kann die Lagerstabilität von entsprechenden bei Raumtemperatur festen Stoffmischungen besonders gut sein.

Geeignete polymere Lösungsmittel im erfindungsgemäßen Sinne sind beispielsweise entsprechende Polyether, Polyester, Polyamide, Polyurethane, Polysiloxane und dergleichen. Für die Herstellung fließfähiger Systeme können bei Raumtemperatur flüssige Oligomere mit Viskositäten etwa im Bereich von 1000 bis 70 000 mPas (Raumtemperatur) besonders interessant sein. Es hat sich gezeigt, daß insbesondere Polyester und Polyamide im Rahmen der Erfindung vielseitig anwendbar sind. Sie können — ebenso wie die anderen polymeren Lösungsmittel — in an sich bekannter Weise hergestellt werden, im hier betroffenen Fall beispielsweise durch Polykondensation von Dicarbonsäuren mit Diolen beziehungsweise Diaminen gegebenenfalls unter Mitverwendung von monofunktionellen Reaktanten zur Einschränkung beziehungsweise Regulierung des mittleren Molekulargewichts. Bevorzugt sind hier im allgemeinen gesättigte Dicarbonsäuren und gesättigte Glycole mit jeweils bis zu 15 C-Atomen insbesondere mit bis zu 10 C-Atomen im Molekül. Analog gelten diese Angaben auch für die Amine beziehungsweise Diamine zur Herstellung von Polyamiden. Geeignete Polyether sind beispielsweise Polyethylenoxide oder Polypropylenoxide mit Molekulargewichten im angegebenen Bereich. Im einzelnen gilt hier das umfangreiche Fachwissen der Polymerchemie.

Die Erfindung betrifft in einer weiteren Ausführungsform die Herstellung der neuen durch Luftzutritt aktivierbaren Startersysteme. Hierzu werden die Organo-Borverbindungen unter völligem Sauerstoffausschluß in den inerten organischen Oligomeren beziehungsweise Polymeren gelöst. Gegebenenfalls kann dabei unter mäßigem Erwärmen gearbeitet werden. So ist es beispielsweise möglich zur Beschleunigung der Auflösung auf Temperaturen bis zu 100°C vorzugsweise so etwa 70°C zu erwärmen. Bei der Verwendung von bei Raumtemperatur festen Oligomeren beziehungsweise Polymeren ist die Mitverwendung inerter flüssiger Lösungsmittel zweckmäßig. Geeignet sind hier die bekannten Lösungsmittel für Organoborverbindungen insbesondere Tetrahydrofuran oder Polyether, wie Diethylenglycoldimethylether aber auch Ester, Halogenkohlenwasserstoffe und dergleichen. Unter Mitverwendung dieser flüssigen Hilfsmittel werden innige Mischungen im erfindungsgemäßen Sinne hergestellt, die Hilfsflüssigkeiten können dann abgezogen und dann die Boralkyl/Oligomer-Gemische gemäß der Erfindung isoliert werden. Ihre Lagerung erfolgt zweckmäßigerweise im verschlossenen Gefäß, bevorzugt unter Inertgas, beispielsweise unter Stickstoff.

Der Gehalt an Organo-Borverbindungen im Startersystem liegt üblicherweise nicht über etwa 70 Gewichtsprozent und vorzugsweise nicht über etwa 50 Gewichtsprozent — jeweils bezogen auf das Gesamtgewicht der Mischung. Besonders bevorzugt können niedrigere Konzentrationen der Organo-Borverbindungen im angegebenen Bereich sein. Es ist weiterhin bevorzugt, daß der Gehalt an Organo-Borverbindung wenigstens etwa 1 Gewichtsprozent des Gesamtsystems ausmacht, so daß Mengen von etwa 1 bis 50 Gewichtsprozent insbesondere 3 bis 50 Gewichtsprozent besonders geeignet sein können.

Die erfindungsgemäßen Startersysteme eignen sich in hervorragender Weise als aerob wirksame Polymerisationsinitiatoren mit weitgehend steuerbarer Reaktivität. Die Erfindung betrifft dementsprechend in einer weiteren Ausführungsform die Verwendung der geschilderten neuen Systeme als Polymerisationsinitiatoren für ethylenisch ungesättigte Systeme. Die neuen Starter können dabei im Rahmen aller bekannten Polymerisationstypen eingesetzt werden. Die Polymerisation kann also beispielsweise in Substanz, in Lösung, in Emulsion oder in Suspension durchgeführt werden. Zur Polymerisationsauslösung werden die Startersysteme wenigstens mit katalytischen Mengen einer Sauerstoffquelle in Berührung gebracht. Üblicherweise kann als Sauerstoffquelle reiner Sauerstoff oder Luft verwendet werden. Möglich ist aber auch, den Sauerstoff in gebundener Form, beispielsweise in Form von Hydroperoxiden oder Peroxiden, zuzusetzen.

Besonders geeignet können die neuen Startersysteme für die Verwendung in Reaktionsklebstoffen sein. Insbesondere betrifft damit die Erfindung die Verwendung der neuen Startersysteme in 2-Komponenten-Reaktionsklebstoffen, die neben einer an sich bekannten, die Klebstoffsubstanz bildenden Komponente einen getrennt gelagerten Härter aufweisen. Als Härter eignen sich hier die erfindungsgemäßen Systeme aus Organo-Borverbindungen und oligomeren beziehungsweise polymeren inerten Lösungsmitteln. Als polymerisierbare Bestandteile können die zahlreichen bekannten Verbindungen mit polymerisierbarer ethylenischer Doppelbindung eingesetzt werden, die üblicherweise in Reaktionsklebstoffen zur Verwendung kommen. Insbesondere geeignet sind die Ester von Akrylsäure und/oder $\alpha$-substituierten Acrylsäuren wie Methacrylsäure mit monovalenten oder polyvalenten, insbesondere zweiwertigen Alkoholen. Geeignet sind aber auch andere bekannte Derivate der (Meth)-acrylsäure, insbesondere die entsprechenden Säureamide, die am Amidstickstoff auch substituiert sein können. Weitere möglichen Substituenten in $\alpha$-Stellung der Acrylsäurederivate sind beispielsweise Halogen, insbesondere Chlor und/oder Brom, Cyan oder allgemein Alkylreste bis zu 10 C-Atomen.

Die Erfindung betrifft damit in einer Ausführungsform die Verwendung der geschilderten Startersysteme als Härter in Klebstoffen zum Verbinden von beispielsweise Metall, Holz, Glas, Keramik und/oder Kunststoffen ebenso wie die entsprechende Verwendung als chirurgisches Bindemittel zum Verbinden von hartem Gewebe, insbesondere Knochen gewünschtenfalls mit Metallen oder Kunststoffen oder auch im Rahmen von dentalmedizinischem Binde- beziehungsweise Füllmaterial.

Zur Härtung solcher Reaktionsmassen setzt man üblicherweise 0,1 bis 40 Gewichtsprozent, insbesondere etwa 0,1 bis 30 Gewichtsprozent — jeweils bezogen auf den polymerisierenden Anteil — der Borinitiatoren ein. Bevorzugt können die Härter in Mengen von 0,5 bis 10 Gewichtsprozent — bezogen auf den zu polymerisierenden Anteil — verwendet werden.

## Beispiele

## Oligomere Lösungsmittel

Folgende oligomeren »Komponenten« wurden verwendet:

Silikonöl AK 5000®
(flüssiges Silikon mit einem mittleren Molekulargewicht von etwa 5000)
Polywachs 3000®
(Polyethylenglycol mit einem mittleren Molekulargewicht von etwa 3000)
Oligoester aus Trimethyladipinsäure und Hexamethylenglykol
(mittleres Molekulargewicht ca. 1200 g/Mol),

der wie folgt hergestellt worden ist:

## Herstellung eines Oligoesters

In einem Dreihalskolben mit Rührer und Destillationsbrücke werden 4 Mol Trimethyladipinsäure und 5 Mol Hexamethylenglykol vorgelegt. Unter Stickstoff wird schnell auf 150°C und dann im Verlauf von 6 Stunden von 150 auf 200°C hochgeheizt. Dabei spaltet sich bereits der größte Anteil des Reaktionswassers, der den Umsatz der Esterkondensation anzeigt, ab. Man läßt den Ansatz auf etwa 150°C abkühlen, evakuiert vorsichtig auf 10 Torr und vervollständigt den Umsatz bei 200°C und 10 Torr. Das Produkt wird heiß abgefüllt. Das Produkt ist viskos und braun gefärbt.

Oligoamid aus Adipinsäure und Trimethylhexamethylendiamin (mittleres Molekulargewicht ca. 1050 g/Mol), das wie folgt hergestellt wurde:

## Herstellung eines Oligoamids

In einem Dreihalskolben mit Rührer und Destillationsaufsatz werden 1,3 Mol Trimethylhexamethylendiamin vorgelegt und 1 Mol Adipinsäure zügig unter gelegentlicher Wasserkühlung zugegeben, wobei darauf geachtet werden muß, daß die Reaktionstemperatur zwischen 100 und 140°C liegt, damit das Ammoniumsalz flüssig bleibt. Das Ammoniumsalz wird unter Stickstoff im Verlauf von 6 Stunden langsam von 140°C auf 200°C hochgeheizt. Dabei spaltet sich bereits der größte Anteil des Reaktionswassers, der den Umsatz der Amidbildung anzeigt, ab. Man läßt den Ansatz auf etwa 150°C abkühlen, evakuiert vorsichtig auf 10 Torr und vervollständigt die Amidbildung bei 200°C und 10 Torr. Das Produkt wird heiß abgefüllt. Das Produkt ist fest und durchsichtig. Die Aminzahl beträgt 103.

## Boralkyle

Folgende Boralkyle wurden verwendet:

Tri-n-butylbor
9-Borabicyclo[3.3.1]nonan (9-BBN)
Hydroborierungsprodukt aus Ölsäuremethylester und 9-BBN

## Herstellung des 9-Borabicyclo[3.3.1]nonan-(9-BBN)-Derivats von Ölsäuremethylester

Zur Befreiung von Restsauerstoff werden 100 g Ölsäuremethylester in 100 g frischdestilliertem Tetrahydrofuran gelöst. Im Anschluß wird das Lösungsmittel im Vakuum bei $10^{-4}$ Torr abgezogen. In einer Glovebox wird der Ölsäuremethylester erneut in 100 g unter Stickstoff frisch destilliertem THF gelöst, zur Lösung unter vollständigem Sauerstoffausschluß 41 g 9-BBN zugegeben und das Gemisch so lange gerührt, bis das 9-BBN quantitativ in Lösung gegangen ist. Im Anschluß erhitzt man 1 Stunde unter Rühren auf 60°C. Das THF wird im Vakuum abgezogen und das Vorratsgefäß verschlossen. Die Entnahme von Proben erfolgt unter Schutzglas und völligem Sauerstoffausschluß. Das Produkt ist homogen, niedrigviskos und gelblich gefärbt.

## Mischungen aus Boralkylen und Oligomeren

### Herstellung von Oligomer/Boralkyl-Gemischen

Zur Befreiung von Restsauerstoff werden jeweils 100 g der Oligomeren in 100 g frischdestilliertem Tetrahydrofuran gelöst. Im Anschluß wird das Lösungsmittel im Vakuum bei $10^{-4}$ Torr abgezogen. In einer Glovebox werden zu jeweils 100 g der Oligomeren erneut 100 g destilliertes, entgastes THF zugegeben und in diese Lösungen unter vollständigem Sauerstoffausschluß jeweils 41 g der angegebenen Borverbindungen eingetragen. Das Gemisch wird zur weiteren Homogenisierung gerührt. Im Anschluß erhitzt man 1 Stunde unter Rühren auf 60°C. Das THF wird im Vakuum abgezogen und das Vorratsgefäß geschlossen. Die Entnahme von Proben erfolgt unter Schutzgas und völligem Sauerstoffausschluß.

## Eigenschaften von Oligomer/Boralykl-Gemischen

Die Eigenschaften der Oligomer/Boralkyl-Gemische sind in der Tabelle 1 zusammengestellt.

Tabelle 1

Eigenschaften von Oligomer/Boralkyl-Gemischen

| Oligomer | Boralkyl Tri-n-butylbor | 9-BBN | 9-BBNx Ölsäuremethylester |
|---|---|---|---|
| Silikonöl AK 5000® | trübe, viskose Flüssigkeit | trübe, viskose Flüssigkeit | weißes Wachs |
| Polywachs 3000® | | weißes Pulver | |
| Oligoester | viskose Flüssigkeit, dunkelbraun | viskose Flüssigkeit, dunkelbraun | viskose Flüssigkeit, dunkelbraun |
| Oligoamid | | hellgelbes Pulver | |

6

Verwendung der dargestellten Oligomer-Boralkyl-Mischungen als Härter für Monomerklebstoffe

## Allgemeine Vorschrift

In einem Becherglas wurden 40 g Polymethacrylsäuremethylester (PMMA, handelsübliche Pulver)*) in 45 g Methacrylsäuremethylester (MMA) und 5 g Methacrylsäure (MAS) unter Rühren gelöst. Zu jeweils 5 g dieser Mischung wurden unter weiterem intensiverem Rühren zwischen 1,5 und 23 Gewichtsprozent der in der Tabelle 1 beschriebenen Mischungen zugegeben. Die Topfzeiten der Mischungen variieren zwischen 1 und 15 Minuten. Mit diesen Klebstoffen wurden innerhalb der Topfzeit sandgestrahlte und entfettete Eisenbleche verklebt und nach 24 Stunden die Festigkeit im Zugscherversuch nach DIN 53 281/3 gemessen. Die Ergebnisse sind in der Tabelle 2 zusammengestellt.

*) Plexigum MB 319 der Firma RÖHM, Darmstadt.

Zum Nachweis der Stabilität der verwendeten Gemische gegenüber Luftsauerstoff wurden sie in einer weiteren Versuchsreihe im offenen Gefäß zwischen 24 und 48 Stunden an der Luft gelagert und im Anschluß als Härter eingesetzt und getestet. Die Topfzeiten und Zugscherfestigkeiten sind in der Tabelle 2 in Klammern gesetzt.

Tabelle 2

Topfzeiten und Zugscherfestigkeiten auf sandgestrahlten und entfetteten Eisenblechprüfkörpern bei der Härtung von Methacrylatklebstoffen (40 g PMMA, 45 g MMA, 5 g MAS) mit den Gemischen aus der Tabelle 1.
Bei den in Klammern gesetzten Meßergebnissen wurde der Boralkylhärter vor der Verwendung 24 – 72 Stunden bei Raumtemperatur an der Luft gelagert.

Gemisch aus Silikonöl AK 5000® und Tri-n-butylbor:

| Härterkonzentration Gew.-% | Topfzeit min | Zugscherfestigkeiten Nmm$^{-2}$ |
|---|---|---|
| 1,5 | 7 | 0 |
| 3 | 3 | 20 |
| 5 | 2,5 | 20 |
| 10 | 2 | 20 |
| 23 | 1 | 14 |

Nach 24stündiger Lagerung an der Luft ist dieses Boralkyl nicht mehr aktiv.

Tabelle 2 (Fortsetzung)

Gemisch aus Silikonöl AK 5000® und 9-BBN

| Härterkonzentration Gew.-% | Topfzeit min | | Zugscherfestigkeiten Nmm$^{-2}$ | |
|---|---|---|---|---|
| 1,5 | 14 | (10) | 1 | (0) |
| 3 | 12 | (10) | 8 | (0) |
| 5 | 10 | (10) | 13 | (9) |
| 10 | 5 | (10) | 14 | (12) |
| 23 | 3 | (8) | 8 | (9) |

Bei den in Klammern gesetzten Meßergebnissen wurde der Boralkylhärter vor der Verwendung 72 Stunden an der Luft gelagert.

Tabelle 2 (Fortsetzung)

Gemisch aus Silikonöl AK 5000® und dem Produkt Ölsäuremethylester/9-BBN

| Härterkonzentration Gew.-% | Topfzeit min | Zugscherfestigkeiten Nmm$^{-2}$ |
|---|---|---|
| 1,5 | 9,5 | 13 |
| 3 | 6,5 | 18 |
| 5 | 5,5 | 23 |
| 10 | 3 | 26 |
| 23 | 1,5 | 17 |

Nach 72stündiger Lagerung an der Luft ist dieses Boralkyl nicht mehr aktiv.

Tabelle 2 (Fortsetzung)

Gemisch aus Polywachs 3000® und 9-BBN

| Härterkonzentration Gew.-% | Topfzeit min | Zugscherfestigkeiten Nmm$^{-2}$ |
|---|---|---|
| 1,5 | 15 (10) | 0 (0) |
| 3 | 14 (10) | 8 (0) |
| 5 | 11 (10) | 8 (3,6) |
| 10 | 9 (10) | 6 (9) |
| 23 | 3 (10) | 4 (5) |

Bei den in Klammern gesetzten Meßergebnissen wurde der Boralkylhärter vor der Verwendung 72 Stunden bei Raumtemperatur an der Luft gelagert.

Tabelle 2 (Fortsetzung)

Gemisch aus Oligoester und Tri-n-butylbor

| Härterkonzentration Gew.-% | Topfzeit min | Zugscherfestigkeiten Nmm$^{-2}$ |
|---|---|---|
| 1,5 | 7,5 (14) | 6 (0) |
| 3 | 5 (14) | 11 (0) |
| 5 | 4 (14) | 16 (0) |
| 10 | 4 (9) | 16 (5) |
| 23 | 4 (8) | 19 (11) |

Bei den in Klammern gesetzten Meßergebnissen wurde der Boralkylhärter vor der Verwendung 24 Stunden bei Raumtemperatur an der Luft gelagert.

# 0 078 994

Tabelle 2 (Fortsetzung)

Gemisch aus Oligoester und 9-BBN

| Härterkonzentration Gew.-% | Topfzeit min | | Zugscherfestigkeiten Nmm$^{-2}$ | |
|---|---|---|---|---|
| 1,5 | 9 | (15) | 17 | (0) |
| 3 | 9 | (9) | 26 | (14) |
| 5 | 7 | (7) | 21 | (21) |
| 10 | 6,5 | (6) | 26 | (26) |
| 23 | 6 | (5,5) | 24 | (24) |

Bei den in Klammern gesetzten Meßergebnissen wurde der Boralkylhärter vor der Verwendung 24 Stunden an der Luft gelagert.

Tabelle 2 (Fortsetzung)

Gemisch aus Oligoester und dem Produkt Ölsäuremethylester/9-BBN

| Härterkonzentration Gew.-% | Topfzeit min | | Zugscherfestigkeiten Nmm$^{-2}$ | |
|---|---|---|---|---|
| 1,5 | 14 | (15) | 0 | (0) |
| 3 | 9 | (15) | 7 | (0) |
| 5 | 8 | (15) | 24 | (19) |
| 10 | 6 | (12) | 28 | (24) |
| 23 | 5 | (8) | 29 | (27) |

Bei den in Klammern gesetzten Meßergebnissen wurde der Boralkylhärter vor der Verwendung 24 Stunden bei Raumtemperatur an der Luft gelagert.

Tabelle 2 (Fortsetzung)

Gemisch aus Oligoamid und 9-BBN

| Härterkonzentration Gew.-% | Topfzeit min | | Zugscherfestigkeiten Nmm$^{-2}$ | |
|---|---|---|---|---|
| 1,5 | 7 | (10) | 0 | (7) |
| 3 | 6,5 | (7) | 6 | (15) |
| 5 | 4 | (6,5) | 8 | (15) |
| 10 | 3,5 | (5) | 13 | (8) |
| 23 | 2 | (3) | 11 | (2) |

Bei den in Klammern gesetzten Meßwerten wurde der Boralkylhärter vor der Verwendung 72 Stunden bei Raumtemperatur an der Luft gelagert.

9

### Beispiele für Anwendung in der Medizin

### Probekörper

Knochenprüfkörper aus Rindercortalis mit den Abmessungen 50 x 20 x 5 mm wurden in der Mitte — exakt rechtwinklig zu den Seitenflächen (50 x 5 mm) — mit einer Diamant-Trennsäge unter Wasserspülung osteotomiert.

Auf diese Weise wurden paßgenaue Fügeteile mit einer Berührungsfläche von 1 cm² hergestellt.

### Probekörpervorbehandlung

Die nicht weiter vorbehandelten Knochenprüfkörper wurden 2 Stunden in eine 37° C warme Ringerlösung gelegt, um die Knochen intensiv zu benetzen.

### Verklebung

Klebstoffharz (A) und Härter (B) werden gemischt. Das Gemisch wird auf den feuchten Knochen aufgetragen.

Die Prüfkörper werden gefügt, in eine Presse aus PVC überführt und mit 5 N belastet. Die Klebepresse verhindert ein seitliches Verschieben der Prüfkörper während der Aushärtung.

### Aushärtebedingungen

Die gefügten Knochen werden in der Klebepresse 20 min lang in einer Klimakammer bei 37° C und ca. 100% relativer Luftfeuchtigkeit gelagert. Im Anschluß werden sie der Klebepresse entnommen und 20 Std. in Ringerlösung bei 37° C gelagert.

### Festigkeitsmessung

Die Zugfestigkeit wird an einer Universalprüfmaschine mit einer Vorschubgeschwindigkeit von 1,0 mm/min zerrissen.

Aufgrund der durch das natürliche Substrat vorgegebenen breiten Streuung der Meßwerte wurden jeweils die Festigkeitsbereiche aus 6 Einzelversuchen angegeben.

### Harzkomponenten A

| A 1 | Methylmethacrylat | 50 Gew.-% |
|---|---|---|
| | IPA 514®[1]) | 5 Gew.-% |
| | Polymethylmethacrylat[2]) | 45 Gew.-% |
| A 2 | Methylmethacrylat | 45 Gew.-% |
| | IPA 514® | 10 Gew.-% |
| | Polymethylmethacrylat | 45 Gew.-% |
| A 3 | Methylmethacrylat | 50 Gew.-% |
| | IPA 514® | 5 Gew.-% |
| | Perfluoralkylmethacrylat[3]) | 5 Gew.-% |
| | Polymethylmethacrylat | 40 Gew.-% |
| A 4 | Methylmethacrylat | 45 Gew.-% |
| | Methacrylsäure | 5 Gew.-% |
| | IPA 514® | 5 Gew.-% |
| | Perfluoralkylmethacrylat | 5 Gew.-% |
| | Polymethylmethacrylat | 40 Gew.-% |

1) Gemisch aus Methacryloyloxyethylphosphat und Bismethacryloyloxyethylphosphat der Johucu Chemical, Japan.
2) Plexigum MB 319® der Firma Röhm, Darmstadt.
3) Umsetzungsprodukt von Perfluordodecansäure mit Glycidylmethacrylat.

10

Zur Herstellung der Harzkomponenten wird Polymethylmethacrylat unter intensivem Rühren in den entsprechenden Monomeren gelöst.

Initiatorkomponente B

In einem Dreihalskolben mit Rührer und Destillationsbrücke werden 4 Mol Trimethyladipinsäure und 5 Mol Hexamethylenglykol vorgelegt. Unter Stickstoff wird schnell auf 150° C und dann im Verlauf von 6 Stunden von 150 auf 200° C hochgeheizt. Dabei spaltet sich bereits der größte Anteil des Reaktionswassers, der den Umsatz der Esterkondensation anzeigt, ab. Man läßt den Ansatz auf etwa 150° C abkühlen, evakuiert vorsichtig auf 10 Torr und vervollständigt den Umsatz bei 200° C und 10 Torr. Der Oligoester wird heiß abgefüllt. Er ist viskos und braun gefärbt.

Zur Befreiung von Restsauerstoff werden 100 g des Oligoesters in 100 g frischdestilliertem Tetrahydrofuran gelöst. Im Anschluß wird das Lösungsmittel im Vakuum bei $10^{-4}$ Torr abgezogen. In einer Glovebox werden zu 100 g des Oligoesters erneut 100 g destilliertes, entgastes THF zugegeben und in diese Lösung unter vollständigem Sauerstoffausschluß 41 g 9-Borabicyclo[3.3.1]nonan eingetragen. Das Gemisch wird zur weiteren Homogenisierung gerührt. Im Anschluß erhitzt man 1 Stunde unter Rühren auf 60° C. Das THF wird im Vakuum abgezogen und das Vorratsgefäß geschlossen. Die Entnahme von Proben erfolgt unter Schutzgas und vollständigem Sauerstoffausschluß. Das Produkt ist eine viskose, dunkelbraune Flüssigkeit.

Tabelle 3

Übersicht über die gemessenen Zugfestigkeiten (N cm$^{-2}$)

| Harzkomponente A | Härtekomponente B |
|---|---|
| A 1 | 230 – 440 |
| A 2 | 280 – 300 |
| A 3 | 300 – 650 |
| A 4 | 200 – 390 |

**Patentansprüche**

1. Durch Luftzutritt aktivierbares Startersystem für die Polymerisation olefinischer Verbindungen auf Basis von Organo-Borverbindungen mit verbesserter Lagerstabilität auch bei Luftzutritt, dadurch gekennzeichnet, daß es aus einer homogenen Mischung wenigstens einer durch Luftzutritt aktivierbaren Organo-Borverbindung mit wenigstens einem bei Raumtemperatur flüssigen bis festen, den Organo-Borverbindungen gegenüber inerten organischen Oligomeren beziehungsweise Polymeren besteht.

2. Stoffgemisch nach Anspruch 1, dadurch gekennzeichnet, daß die organische Oligomer- beziehungsweise Polymerkomponente Lösungsmittelfunktion für die Organo-Borverbindung aufweist.

3. Stoffgemisch nach Ansprüchen 1 und 2, dadurch gekennzeichnet, daß die homogene Mischung etwa 1 bis 70 Gewichsprozent, vorzugsweise etwa 1 bis 50 Gewichtsprozent der Organo-Borverbindung — bezogen auf Gesamtgewicht der Mischung — enthält.

4. Stoffgemisch nach Ansprüchen 1 bis 3, dadurch gekennzeichnet, daß die homogene Mischung bei Raumtemperatur flüssig bis pastös streichbar ist und eine Lösung einer Organo-Borverbindung in einer solchen Verbindungen gegenüber inerten Oligomer- beziehungsweise Polymerkomponente darstellt.

5. Stoffgemisch nach Ansprüchen 1 bis 4, dadurch gekennzeichnet, daß Organo-Borverbindungen vorliegen, die bei Raumtemperatur als solche nicht selbstentzündlich sind.

6. Stoffgemisch nach Ansprüchen 1 bis 5, dadurch gekennzeichnet, daß Alkyl- und/oder Arylreste aufweisende Organo-Borverbindungen vorliegen, die auch B-H-Bindungen besitzen können.

7. Stoffgemisch nach Ansprüchen 1 bis 6, dadurch gekennzeichnet, daß die Organo-Borverbindungen Dialkylborhydride und/oder Trialkylborverbindungen sind, deren Alkylreste bis zu 30, vorzugsweise bis zu 25, und insbesondere bis zu 15 C-Atome aufweisen, wobei wenigstens zwei der an einem Bor substituierten Alkylreste gemeinsam ein Ringsystem bilden können.

8. Stoffgemisch nach Ansprüchen 1 bis 7, dadurch gekennzeichnet, daß als oligomere beziehungsweise polymere organische Komponente gegenüber Organo-Borverbindungen inerte, bei Raumtemperatur flüssige bis feste, vorzugsweise flüssige bis pastös streichbare Polykondensate und/oder Polyadditionsprodukte eingesetzt werden, insbesondere Polyether, Polyester und/oder Polyamide mit Viskositäten im Bereich von 1000 bis 70 000 mPas.

9. Verfahren zur Herstellung der homogenen Stoffgemische nach Ansprüchen 1 bis 8, dadurch gekennzeichnet, daß man die Organo-Borverbindungen unter Ausschluß von Sauerstoff gegebenenfalls unter mäßigem Erwärmen und/oder Mitverwendung von Lösungsmitteln in den Oligomeren beziehungsweise Polymeren löst und das gegebenenfalls mitverwendete Lösungsmittel anschließend wieder abzieht.

10. Verwendung der homogenen Stoffgemische nach Ansprüchen 1 bis 9 als aerob-wirksame Polymerisationsinitiatoren mit weitgehend steuerbarer Reaktivität für ethylenisch ungesättigte Systeme, insbesondere beim Verbinden von Metall, Holz, Glas, Keramik und/oder Kunststoffen mittels Reaktionsklebern, beziehungsweise in chirurgischen Bindemitteln zum Verbinden von hartem Gewebe, insbesondere Knochen, gewünschtenfalls mit Metallen oder Kunststoffen oder als dentalmedizinisches Binde- und Füllmaterial.

## Claims

1. An air-activatable initiator system for the polymerization of olefinic compounds based on organoboron compounds showing improved stability in storage, even in the presence of air, characterized in that it consists of a homogeneous mixture of at least one air-activatable organoboron compound with at least one organic oligomer or polymer which is liquid to solid at room temperature and which is inert to the organoboron compounds.

2. A mixture as claimed in Claim 1, characterized in that the organic oligomer or polymer component has a solvent function with respect to the organoboron compound.

3. A mixture as claimed in Claims 1 and 2, characterized in that it contains from about 1 to 70% by weight and preferably from about 1 to 50% by weight of the organoboron compound, based on the total weight of the mixture.

4. A mixture as claimed in Claims 1 to 3, characterized in that the homogeneous mixture is spreadable as a liquid or paste at room temperature and is a solution of an organoboron compound in an oligomer or polymer component which is inert to such compounds.

5. A mixture as claimed in Claims 1 to 4, characterized in that it contains organoboron compounds which are not spontaneously inflammable as such at room temperature.

6. A mixture as claimed in Claims 1 to 5, characterized in that it contains organoboron compounds containing alkyl and/or aryl radicals and which may also have B-H-bonds.

7. A mixture as claimed in Claims 1 to 6, characterized in that the organoboron compounds are dialkyl borohydrides and/or trialkyl boron compounds of which the alkyl radicals contain up to 30, preferably up to 25 and more preferably up to 15 C-atoms, at least two of the alkyl radicals substituted on a boron optionally forming a ring system together.

8. A mixture as claimed in Claims 1 to 7, characterized in that it contains polycondensates and/or polyaddition products which are inert to organoboron compounds and which are liquid to solid and preferably spreadable as liquids or pastes at room temperature, more particularly polyethers, polyesters and/or polyamides having viscosities in the range from 1000 to 70,000 mPas, as the oligomeric or polymeric organic component.

9. A process for producing the homogeneous mixtures claimed in Claims 1 to 8, characterized in that the organoboron compounds are dissolved in the oligomers or polymers in the absence of oxygen, optionally with heating and/or using solvents, and the solvent used, if any, is subsequently removed.

10. The use of the homogeneous mixtures claimed in Claims 1 to 9 as aerobic polymerization initiators of largely controllable reactivity for ethylenically unsaturated systems, particularly in the bonding of metals, wood, glass, ceramics and/or plastics by means of reactive adhesives, or in surgical bonding agents for bonding hard tissue, particularly bones, if desired to metals or plastics or as a dental-medical binder and filler.

## Revendications

1. Système d'amorçage activable par arrivée d'air de la polymerisation de composés oléfiniques à base de composés organiques du bore, avec stabilité améliorée au magasinage même en cas d'arrivée d'air, système caractérisé en ce qu'il est constitué par un mélange homogène d'au moins un composé organique du bore activable par arrivée d'air avec au moins un oligomère ou polymère organique, inertes vis-à-vis du composé organique du bore et ayant une consistance de fluide à solide à la température ambiante.

2. Composition de matières selon la revendication 1, caractérisée en ce que le composant organique oligomère ou polymère sert de solvant pour le composé organique du bore.

3. Composition de matières selon les revendications 1 et 2, caractérisée en ce que le mélange

# 0 078 994

homogène contient 1 à 70% en poids, de préférence 1 à 50% en poids du composé organique du bore — calculé sur le poids total du mélange.

4. Composition de matières selon les revendications 1 à 3, caractérisée en ce que le mélange homogène présente à la température ambiante, une consistance onctueuse, fluide à pâteuse, et constitue une solution d'un composé organique du bore dans un composant oligomère ou polymère inerte vis-à-vis d'un tel composé.

5. Composition de matières selon les revendications 1 à 4, caractérisée en ce que les composés organiques du bore présents ne sont pas par eux-mêmes auto-inflammables à la température ambiante.

6. Composition de matières selon les revendications 1 à 5, caractérisée en ce que les composés organiques du bore présents comportent des restes alcoyle et/ou aryle et peuvent également comporter des liaisons B-H.

7. Composition de matières selon les revendications 1 à 6, caractérisée en ce que les composés organiques du bore sont des borohydrures de dialcoyle et/ou des composés trialcoylés du bore, dont les restes alcoyle présentent jusqu'à 30, de préférence jusqu'à 25, et en particulier jusqu'à 15 atomes de C, au moins deux des restes alcoyle substitués sur un bore pouvant former ensemble un système annulaire.

8. Composition de matières selon les revendications 1 à 7, caractérisée en ce que comme composant organique oligomère ou polymère, inerte vis-à-vis des composés organiques du bore, on peut utiliser des polycondensats et/ou produits de polyaddition inertes vis-à-vis des composés organiques du bore, de consistance fluide à solide, de préférence fluide à pâteuse, onctueuse à la température ambiante, en particulier des polyéther, polyesters et/ou polyamides avec une viscosité de 1000 à 70 000 mPas.

9. Procédé de préparation de compositions de matières homogènes selon les revendications 1 à 8, caractérisé en ce que le composé organique du bore est dissous dans l'oligomère ou le polymère, à l'abri de l'oxygène, éventuellement par un chauffage modéré et/ou utilisation de solvants, et que le solvant utilisé éventuellement est ensuite éliminé à nouveau.

10. Utilisation des compositions de matières homogènes selon les revendications 1 à 9, comme initiateurs de polymérisation aérobies, avec une réactivité ajustable dans une grande mesure pour des systèmes insaturés éthyléniques, en particulier pour le raccordement de métal, bois, verre, céramique et/ou matières plastiques au moyen d'adhésifs, ou dans des liants chirurgicaux pour le raccordement de tissus durs, en particulier des os, selon le cas avec des métaux ou des matières plastiques, ou comme liant ou charge en médecine dentaire.

13